# EUROPÄISCHE PATENTSCHRIFT

(11) **EP 0 711 466 B1**
(45) Veröffentlichungstag und Bekanntmachung des Hinweises auf die Patenterteilung: **09.04.1997**
(21) Anmeldenummer: 94920405.1
(22) Anmeldetag: 13.07.1994
(51) Int. Cl.: H02H 9/02, H02J 3/04

(54) **VERFAHREN, ANORDNUNG UND VERWENDUNG ZUR KURZSCHLUSSTROMBEGRENZUNG AUF EINER ELEKTRISCHEN ENERGIEÜBERTRAGUNGSLEITUNG**
PROCESS, ARRANGEMENT AND USE FOR LIMITING SHORT CIRCUIT CURRENT ON AN ELECTRIC ENERGY TRANSMISSION LINE
PROCEDE, DISPOSITIF ET UTILISATION DE LIMITATION DU COURANT DE COURT-CIRCUIT SUR UNE LIGNE D'ALIMENTATION ELECTRIQUE

(30) Priorität: 26.07.1993 DE 4325061
(43) Veröffentlichungstag der Anmeldung: 15.05.1996
(73) Patentinhaber: SIEMENS AKTIENGESELLSCHAFT, 80333 München (DE)
(72) Erfinder: MÜLLER, Walter, D-82449 Uffing (DE)
(86) Internationale Anmeldenummer: DE9400806
(87) Internationale Veröffentlichungsnummer: WO9503645

(56) Entgegenhaltungen:
- DE-A- 3 005 950

## Beschreibung

Die Erfindung bezieht sich auf ein Verfahren, eine Anordnung und ein Verwendung zur Kurzschlußstrombegrenzung auf einer elektrischen Energieübertragungsleitung. Der nächstliegende Stand der Technik ist durch die DE-A-3 005 950 offenbart.

Zum Schutz von elektrischen Energieübertragungsleitungen bei Kurzschlüssen ist es bekannt, an deren Enden Schutzgeräte, z. B. ein Distanzschutzgerat oder ein Überstromschutzgerät, einzusetzen. Tritt ein Kurzschluß auf, so wird die fehlerhafte Leitung durch die an deren Enden befindlichen Leistungsschalter abgeschaltet. Die Energieübertragung ist dann völlig unterbrochen. Dies ist insbesondere bei vermaschten Netzen nicht unbedingt erwünscht.

Zur Kopplung von elektrischen Netzen ist es bekannt, eine Regelanordnung mit einem Transformatorensatz einzusetzen (Elektrizitatswirtschaft, Jg. 86 (1987), Heft 4, Seiten 123 bis 128). Ein derartiger Transformatorensatz umfaßt einen in die elektrische Übertragungsleitung geschalteten Zusatztransformator, der zur Erzeugung einer Längs- oder Querspannung auf der Leitung von einem Erregertransformator mit Energie versorgt wird. Ein solcher Transformatorensatz hat die Aufgabe, Phasenverschiebungen zwischen den Netzen auszugleichen, wobei Einfluß auf die zu übertragende Leistung genommen werden kann. Er wird daher auch als Phasenschieber bezeichnet. Im Falle eines Kurzschlusses fließt bei einer derartigen Anordnung ein erheblicher Kurzschlußstrom über den Zusatztransformator. Dies ist unerwünscht.

Bei Ausstattung der Regelanordnung mit einem Halbleiterumrichter zur Ansteuerung des Zusatztransformators ist für die Bemessung der Halbleiterventile der Maximalwert des Netzkurzschlußstromes maßgebend, der nur durch Wahl der Kurzschlußspannung des Zusatztransformators beeinflußt wird. Die Lastflußsteuerung ist um so wirksamer, je kleiner die Kurzschlußspannung des Zusatztransformators gewählt wird. Eine Ausführung der Regelanordnung mit Halbleitern ist aus IEEE SPECTRUM, April 1993, Seiten 40 bis 45, bekannt.

Der Erfindung liegt die Aufgabe zugrunde, ein Verfahren, eine Anordnung und eine Verwendung zur Kurzschlußbegrenzung auf einer elektrischen Energieübertragungsleitung anzugeben, bei denen unter Vermeidung der obengenannten Nachteile ein verbesserter Netzbetrieb möglich ist.

Die Lösung der Aufgabe bezüglich des Verfahrens gelingt erfindungsgemäß mit einem Verfahren nach Anspruch 1.

Die Lösung der Aufgabe bezüglich der Anordnung ist erfindungsgemaß gegeben mit einer Anordnung nach Anspruch 4.

Die Lösung der Aufgabe bezüglich der Verwendung ist erfindungsgemäß gegeben mit einer Verwendung nach Anspruch 3.

Obwohl beim Schutz der Leitung als auch beim Schutz des Zusatztransformators ähnliche Anforderungen im Hinblick auf eine Schadensverhinderung bestehen, wurden diese zwei Probleme bisher immer getrennt behandelt.

Die Erfindung beruht auf der Beobachtung, daß umrichtergesteuerte Phasenschieber mit Transformatorensatz ein sehr günstiges zeitlichen Verhalten aufweisen. Es wurde eine völlig neue Steuerungsart entwickelt, die es ermöglicht, den Phasenschieber quasi als Kurzschlußstrombegrenzer zwischen Versorgungsnetzen einzusetzen. Damit schützt sich die Anordnung selbst und darüber hinaus andere Teile der Versorgungsnetze vor Auswirkungen von Kurzschlußströmen. Da der Zusatztransformator auf diese Weise im Sinne eines Leistungsschalters dient, kann gegebenenfalls der hochspannungstechnische Schaltungsaufwand am Zusatztransformator auch klein gehalten werden. Es brauchen nämlich dann für ihn keine Leistungsschalter mehr vorgesehen werden. Es genügen Trennschalter. Das leistungsmäßige Zusammenschalten der Versorgungsnetze erfolgt dann über die Steuerung des Umrichters am Zusatztransformator.

Dabei ist es von besonderem Vorteil, daß die Leistungshalbleiter, insbesondere die Thyristoren oder GTO-Thyristoren, weit höher ausgenutzt werden können, da die Kurzschlußstromamplitude im Umrichterzwischenkreis bei einem niedrigeren Wert begrenzt werden kann. Mit einer dann entsprechend angepaßten Zwischenkreisspannung kann wiederum mit einer verringerten Anzahl von Thyristoren gearbeitet werden.

Darüber hinaus ist die vorliegende Lösung ein Schritt in Richtung einer integrierten Schutztechnik für die Energieübertragung, bei der durch die Kopplung der einzelnen Komponenten ein optimaler Schutz erzielt wird. Die Erfindung ist auch vorteilhaft bei zukünftigen Energieverteilungsnetzen einsetzbar, bei denen Supraleitung zum Einsatz kommt. Derartige Anwendungen sind nämlich nach dem gegenwärtigen Stand der Technik nur nach dem Prinzip des gesteuerten "Quenchens" möglich.

Weitere vorteilhafte Ausbildungen sind in den übrigen Ansprüchen angegeben. Die Erfindung und weitere Einzelheiten
FIG 1 eine Netzanordnung mit Phasenschieber und
FIG 2 ein zugehöriges Spannungsdiagramm.

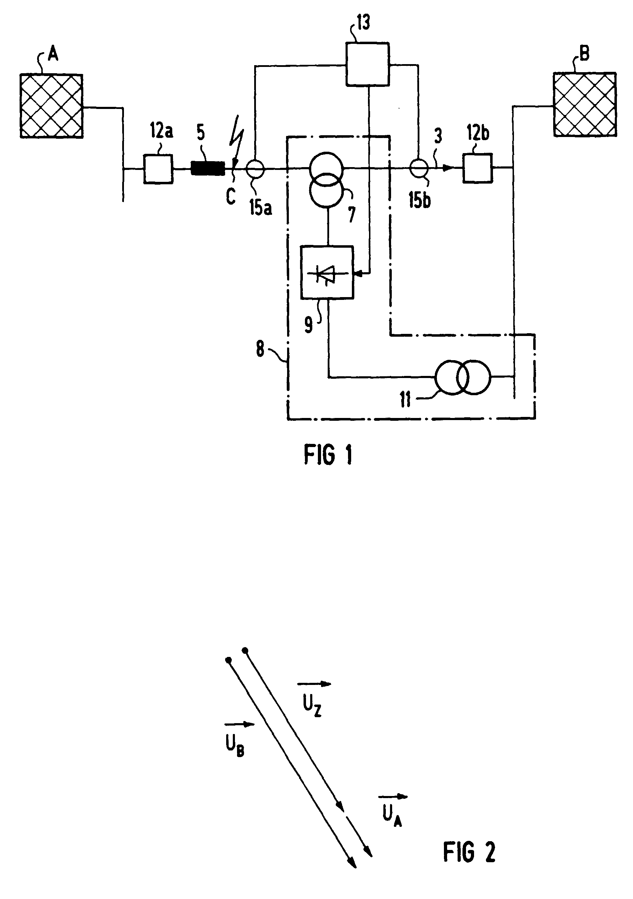

In FIG 1 sind zwei elektrische Versorgungsnetze A und B zu sehen, die über eine elektrische Leitung 3, insbesondere eine Hochspannungsleitung, miteinander verbunden sind. Mit 5 ist die zugehörige Leitungsinduktivität bezeichnet. In die Leitung 3 ist seriell ein Zusatztransformator 7 geschaltet, der als Leistungsteil eines Phasenschiebers 8 dient. Er wird von einem Umrichter 9 (mit Zwischenkreis) mit einem zugehörigem Erregertransformator 11 gesteuert. Der Umrichter 9 ist als Zwischenkreisumrichter mit Halbleiter-Bauelementen, insbesondere mit Leistungshalbleiterbauelementen, z.B. GTO-Thyristoren, ausgebildet.

Findet nun auf der Leitung 3 am Ort C ein Kurzschluß statt, so fließt ein nicht unwesentlicher Teil des Kurzschlußstromes vom Versorgungsnetz B über den Zusatztransformator 7 in den Kurzschluß. Eine zuverlässige Auslösung der am Ende der Leitung 3 angeordneten Netzschutzgeräte 12a, 12b ist unter Umständen nicht gewährleistet. Der Zusatztransformator 7 muß den Kurzschlußstrom führen.

Dem Umrichter 9 ist eine Fehlererfassungseinrichtung 13 elektrisch zugeordnet, die über geeignete Meßfühler 15a, 15b den Ort und/oder die Richtung des Kurzschlusses feststellt und ein entsprechendes Fehlersignal oder -kommando an eine nicht näher gezeigte Steuereinrichtung des Umrichters 9 abgibt. Die Richtung kann gegebenenfalls verschlüsselt im Fehlersignal enthalten sein. Die Fehlererfassungseinrichtung 13 kann auch Teil des Umrichters 13 sein. Der Umrichter 9 veranlaßt dann umgehend mit dem nächsten Nulldurchgang der Spannung am Zusatztransformator 7 eine Energiebegrenzung (oder Sperrung), wodurch die Leistungszufuhr für den Kurzschluß vom Versorgungsnetz B sofort unterbrochen wird. Gegebenenfalls kann die Information über den Fehlerort und/oder die Richtung des Kurzschlusses von bereits vorhandenen Schutzgeräten an der Leitung, z. B. von den vorhandenen benenfalls kann die Information über den Fehlerort und/oder die Richtung des Kurzschlusses von bereits vorhandenen Schutzgeräten an der Leitung, z. B. von den vorhandenen Netzschutzgeräten 12a, 12b, zur Verfügung gestellt werden. Die Einrichtung 13 kann dann entfallen. Als Netzschutzgeräte 12a, 12b kommen beispielsweise ein Distanzschutz oder ein Überstromschutz zur Anwendung.

FIG 2 zeigt ein einpoliges Spannungsdiagramm für den Fall eines Kurzschlusses im Versorgungsnetz A. Die Spannung U_{A} ist dabei gegenüber der Spannung U_{B} durch den Kurzschluß zusammengebrochen. Durch den Phasenschieber 8 wird die Zusatzspannung U_{Z} über den Zusatztransformator 7 eingespeist.

Beim Betrieb des Phasenschiebers 9 als Kurzschlußstrombegrenzer besteht der unmittelbare Vorteil für den Phasenschieber 8, insbesondere seines Umrichters 9, selbst darin, daß die Leistungshalbleiterbauelemente, die beispielsweise bei einer Stoßkurzschlußstromamplitude im Zwischenkreis von 25 kA für einen stationären Dauerstrom von I_{N} = 1kA ausgelegt sind, weit hoher ausgenutzt werden können, wenn die Kurzschlußstromamplitude beispielsweise auf 2 x I_{N} begrenzt wird. Dabei konnte dann ein Dauerstrom von beispielsweise I_{N} = 3 kA zugelassen werden. Dadurch ergibt sich, daß mit einer entsprechend angepaßten Zwischenkreisspannung aufgrund der Reihenschaltung der Leistungshalbleiter nunmehr mit einem Drittel der bisher benötigten Anzahl von Thyristoren gearbeitet werden kann.

Existiert bereits ein Phasenschieber für eine Hochspannungsleitung, so ist für die Realisierung der aufgezeigten Anordnung nur noch eine Erfassung des Kurzschlußortes und/oder des Kurzschlußstromes und eine entsprechende Steuerungsanpassung beim Umrichter des Phasenschiebers erforderlich. Ist dieser mit einem Rechner ausgestattet, so kann dies durch einfache Anpassung der Steuerungssoftware erfolgen.

## Patentansprüche

1. Verfahren zur Kurzschlußstrombegrenzung auf einer elektrischen Übertragungsleitung, in welche ein Transformator mit einer seiner Wicklungen geschaltet ist, mit welcher der Strom auf der Übertragungsleitung begrenzt wird, und wobei mit einer Steuereinrichtung (9) die Kurzschlußstrombegrenzung am Transformator aktiviert wird, **dadurch gekennzeichnet,**
- daß zur Aktivierung der Kurzschlußstrombegrenzung beim Auftreten eines Kurzschlusses auf einer als Hochspannungsleitung (3) ausgebildeten Übertragungsleitung von einem Schutzgerät (12a,12b,13) ein Fehlersignal an die Steuereinrichtung (9) gegeben wird, und
- daß der Transformator ein Zusatztransformator (7) eines Phasenschiebers (8) ist, wobei die Steuereinrichtung (9) dem Zusatztransformator (7) von einem Erregertransformator (11) bereitgestellte Energie zuführt, und wobei im Sinne der Kurzschlußstrombegrenzung mit einer Längs-, Quer- oder Schrägspannung eine Gegenspannung am Zusatztransformator (7) auf der Hochspannungsleitung (3) erzeugt wird.

2. Verfahren nach Anspruch 1, **dadurch gekennzeichnet**, daß die Fehlerrichtung und/oder der Fehlerort des Kurzschlusses vom Schutzgerät (12a, 12b,13) erfaßt und im Fehlersignal verschlüsselt wird, wobei in Abhängigkeit von der Fehlerrichtung eine geeignete Gegenspannung erzeugt wird.

3. Verwendung eines in eine Hochspannungsleitung (3) geschalteten Zusatztransformators (7) eines Phasenschiebers (8) zur Schräg-, Längs- oder Querregelung als Strombegrenzer, wobei die Hochspannungsleitung (3) von einem Schutzgerät (12a, 12b,13) auf einen Kurzschluß überwacht wird und beim Erkennen eines Kurzschlußstromes ein Fehlersignal erzeugt wird, welches einer Steuereinrichtung (9) des Zusatztransformators (7) zur Erzeugung einer Gegenspannung am Zusatztransformator (7) im Sinne der Strombegrenzung zugeführt wird.

4. Anordnung zur Kurzschlußstrombegrenzung auf einer elektrischen Übertragungsleitung, in die ein Transformator mit einer seiner Wicklungen geschaltet ist, mit welcher der Strom auf der Übertragungsleitung begrenzt wird, wobei eine Steuereinrichtung (9) zur Aktivierung der Kurzschlußstrombegrenzung vorgesehen ist,
**dadurch gekennzeichnet,**
- daß der Transformator ein umrichtergesteuerter Zusatztransformator (7) eines Phasenschiebers (8) mit Erregertransformator (11) zur Schräg-, Quer- oder Längsregelung der Energie auf der Übertragungsleitung ist,
- daß die Übertragungsleitung eine Hochspannungsleitung (3) ist, und
- daß ein Schutzgerät (12a, 12b, 13) zum Erfassen eines Kurzschlusses auf der Hochspannungsleitung (3) vorgesehen ist,
- wobei beim Erfassen eines Kurschlusses vom Schutzgerät (12a, 12b, 13) ein Fehlersignal an die Steuereinrichtung (9) des Zusatztransformators (3) gegeben wird, und im Sinne der Kurzschlußstrombegrenzung mit einer Längs-, Quer- und Schrägspannung eine Gegenspannung am Zusatztransformator (7) auf der Hochspannungsleitung (3) erzeugt wird.

5. Anordnung nach Anspruch 4, **dadurch gekennzeichnet,** daß das Schutzgerät (12a,12b) ein Distanzschutzgerät oder ein Überstromschutzgerät ist.

6. Anordnung nach Anspruch 4 oder 5, **dadurch gekennzeichnet**, daß der Phasenschieber (8) einen Umrichter (9) zur Speisung des Zusatztransformators (7) aufweist und der Umrichter (9) die Steuereinrichtung umfaßt.

7. Anordnung nach Anspruch 6, **dadurch gekennzeichnet**, daß der Umrichter (9) als Halbleiterumrichter mit Zwischenkreis ausgebildet ist.

## Claims

1. Method for short-circuit current limiting on an electrical transmission line in which one of the windings of a transformer is connected, by means of which winding the current on the transmission line is limited, and in which case the short-circuit current limiting on the transformer is activated by a control device (9), characterized
- in that a fault signal is passed from a protective device (12a, 12b, 13) to the control device (9) for activation of the short-circuit current limiting on the occurrence of a short circuit on a transmission line which is designed as a high-voltage line (3), and
- in that the transformer is an additional transformer (7) of a phase shifter (8), the control device (9) supplying to the additional transformer (7) power which is provided by an energizer transformer (11), and an opposing voltage being produced at the additional transformer (7) on the high-voltage line (3) in the sense of short-circuit current limiting, with an in-phase, quadrature-phase or phase-shifted voltage.

2. Method as claimed in Claim 1, characterized in that the fault direction and/or the fault location of the short circuit are/is detected by the protective device (12a, 12b, 13) and are/is encrypted in the fault signal, a suitable opposing voltage being produced as a function of the fault direction.

3. Use of an additional transformer (7), which is connected in a high-voltage line (3), of a phase shifter (8), for phase-shifted, in-phase or quadrature-phase regulation as a current limiter, the high-voltage line (3) being monitored by a protective device (12a, 12b, 13) for any short circuit and a fault signal being produced on identification of a short-circuit current, which fault signal is supplied to a control device (9) of the additional transformer (7) for producing an opposing voltage at the additional transformer (7) in the sense of current limiting.

4. Arrangement for short-circuit current limiting on an electrical transmission line in which one of the windings of a transformer is connected, by means of which winding the current on the transmission line is limited, a control device (9) being provided for activation of short-circuit current limiting, characterized
- in that the transformer is a converter-controlled additional transformer (7) of a phase shifter (8) with an energizer transformer (11) for phase-shifted, quadrature-phase or in-phase regulation of the power on the transmission line,
- in that the transmission line is a high-voltage line (3), and
- in that a protective device (12a, 12b, 13) is provided for detection of a short circuit on the high-voltage line (3),
- a fault signal being passed to the control device (9) of the additional transformer (3) on detection of a short circuit by the protective device (12a, 12b, 13), and an opposing voltage being produced at the additional transformer (7) on the high-voltage line (3), in the sense of short-circuit current limiting, with an in-phase, quadrature-phase and phase-shifted voltage.

5. Arrangement as claimed in Claim 4, characterized in that the protective device (12a, 12b) is a distance protective device or an overcurrent protective device.

6. Arrangement as claimed in Claim 4 or 5, characterized in that the phase shifter (8) has a converter (9) for supplying the additional transformer (7), and the converter (9) comprises the control device.

7. Arrangement as claimed in Claim 6, characterized in that the converter (9) is designed as a semiconductor converter having an intermediate circuit.

## Revendications

1. Procédé de limitation du courant de court-circuit sur une ligne de transport d'énergie électrique, dans laquelle l'un des enroulements d'un transformateur est branché, le courant sur la ligne de transport d'énergie étant limité par cet enroulement et la limitation du courant de court-circuit étant activée sur le transformateur par un dispositif (9) de commande,
caractérisé en ce que
- un signal d'erreur est fourni au dispositif (9) de commande par un appareil (12a, 12b, 13) de protection pour activer la limitation du courant de court-circuit lorsqu'un court-circuit apparaît sur une ligne de transport d'énergie sous forme de ligne (3) haute-tension, et
- le transformateur est un transformateur (7) survolteur-dévolteur d'un déphaseur (8), le dispositif (9) de commande envoyant au transformateur (7) survolteur-dévolteur de l'énergie fournie par un transformateur (11) d'excitation et une contre-tension aux bornes du transformateur (7) survolteur-dévolteur étant produite sur la ligne (3) haute-tension en vue de la limitation du courant de court-circuit par une composante de tension longitudinale, transversale ou oblique.

2. Procédé suivant la revendication 1, caractérisé en ce que l'on détecte le sens de l'erreur et/ou le lieu de l'erreur du court-circuit par l'appareil (12a, 12b, 13) de protection, on le code dans le signal d'erreur et on produit, en fonction du sens de l'erreur, une contre-tension appropriée.

3. Utilisation d'un transformateur (7) survolteur-dévolteur, branché dans une ligne (3) haute-tension, d'un déphaseur (8) pour la régulation en oblique, longitudinale ou transversale en tant que limiteur de courant, un éventuel court-circuit sur la ligne (3) haute tension étant contrôlé par un appareil (12a, 12b, 13) de protection et un signal d'erreur étant produit en cas de détection d'un courant de court-circuit, ce signal étant envoyé à un dispositif (9) de commande du transformateur (7) survolteur-dévolteur pour la production d'une contre-tension aux bornes du transformateur (7) survolteur-dévolteur en vue de la limitation du courant.

4. Dispositif de limitation du courant de court-circuit sur une ligne de transport d'énergie électrique, dans laquelle un des enroulements d'un transformateur est branché, le courant sur la ligne de transport d'énergie étant limité par cet enroulement, un dispositif (9) de commande étant prévu pour l'activation de la limitation du courant de court-circuit,
caractérisé en ce que
- le transformateur est un transformateur (7) survolteur-dévolteur, commandé par convertisseur de fréquence, d'un déphaseur (8) à transformateur (11) d'excitation pour la régulation en oblique, transversale ou longitudinale de l'énergie sur la ligne de transport d'énergie,
- la ligne de transport d'énergie est une ligne (3) haute-tension et
- un appareil (12a, 12b, 13) de protection est prévu pour la détection d'un court-circuit sur la ligne (3) haute tension,
- un signal d'erreur étant fourni au dispositif (9) de commande du transformateur (3) survolteur-dévolteur lorsqu'un court-circuit est détecté par l'appareil (12a, 12b, 13) de protection, et une contre-tension aux bornes du transformateur (7) survolteur-dévolteur étant produite sur la ligne (3) haute-tension en vue de la limitation du courant de court-circuit par une composante de tension longitudinale, une composante de tension transversale et une composante de tension en oblique.

5. Dispositif suivant la revendication 4, caractérisé en ce que l'appareil (12a, 12b) de protection est un appareil de protection à distance ou un appareil de protection à maximum de courant.

6. Dispositif suivant la revendication 4 ou 5, caractérisé en ce que le déphaseur (8) comporte un convertisseur (9) de fréquence pour l'alimentation du transformateur (7) survolteur-dévolteur et le convertisseur (9) de fréquence comprend le dispositif de commande.

7. Dispositif suivant la revendication 6, caractérisé en ce que le convertisseur (9) de fréquence est formé d'un convertisseur de fréquence à semiconducteur et à circuit intermédiaire.
